# EUROPÄISCHE PATENTSCHRIFT

(11) **EP 0 780 946 B1**
(45) Veröffentlichungstag und Bekanntmachung des Hinweises auf die Patenterteilung: **08.03.2000**
(21) Anmeldenummer: 96118801.8
(22) Anmeldetag: 23.11.1996
(51) Int. Cl.: H02G 3/18

(54) **Elektrisches Installationsgerät**
Electrical installation device
Appareil pour installation électrique

(30) Priorität: 22.12.1995 DE 29520460 U; 26.06.1996 DE 19625665
(43) Veröffentlichungstag der Anmeldung: 25.06.1997
(73) Patentinhaber: GIRA GIERSIEPEN GmbH. & CO. KG., D-42477 Radevormwald (DE)
(72) Erfinder: Fischer, Stefan, D-42929 Wermelskirchen (DE); Riediger, Frank, D-42651 Solingen (DE)
(74) Vertreter: Zapf, Christoph, Dipl.-Ing.

(56) Entgegenhaltungen:
- CH-A- 647 898
- DE-A- 2 757 267
- DE-A- 3 346 749

## Beschreibung

Die vorliegende Erfindung betrifft ein elektrisches Installationsgerät für den Einbau in eine Einbauöffnung einer Installationsdose oder dergleichen, bestehend aus einem Gerätekörper mit mindestens zwei quer zur Einbaurichtung gesehen gegenüberliegend angeordneten Spreizkrallen, wobei jede der Spreizkrallen derart am Gerätekörper gelagert ist, daß sie zur Einbauhalterung des Gerätekörpers mittels einer Stellschraube mit ihrem freien Ende von dem Gerätekörper weg nach außen spreizbar ist, und wobei in einer Ausgangsposition der Spreizkrallen der Gerätekörper unter Verformung der elastischen Krallenteile in die Einbauöffnung einsteckbar und darin durch die elastischen Krallenteile kraft- und/oder formschlüssig fixierbar ist.

Ähnliche Installationsgeräte sind bereits bekannt, wobei es sich zumeist um Unterputzgeräte handelt, die im wesentlichen aus einem Sockelteil, einem daran befestigten Rahmenteil und zwei gegenüberliegend am Sockelteil angeordneten Spreizkrallen bestehen. Die Spreizkrallen sind dabei bekanntermaßen als im wesentlichen starre, "formstabile", winkelförmige Teile ausgebildet, wobei ein Winkelteil der Spreizkralle ein Loch für die Befestigung mittels einer Befestigungsschraube am Sockelteil aufweist und der andere Winkelteil mit nach außen weisenden Krallenenden ausgebildet ist, so daß durch Andrehen der Befestigungsschrauben die Spreizkrallen mit ihren Krallenenden nach außen gerichtet werden und so das Sockelteil in einer Installationsdose oder dergleichen haltern.

Diese Installationsgeräte weisen jedoch verschiedene Nachteile auf. So ist vor allem der Einbau dieser Geräte in vormontierte Installationsdosen oder dergleichen sehr umständlich und zeitaufwendig, da die Geräte während des Befestigungsvorganges durch das Andrehen der Befestigungsschrauben stets zusätzlich in der gewünschten Position festgehalten werden müssen, damit sie nicht verrutschen oder teilweise aus der Dose herausfallen. Weiterhin müssen die Befestigungsschrauben nahezu gleichmäßig weit angedreht werden, um eine Zentrierung des Gerätes in der Dose zu erreichen. Ein weiterer Nachteil tritt auf, wenn beide Spreizkrallen im Bereich der spreizbaren Enden bei der Fertigung gemeinsam mit einem Gummiring am Sockelteil fixiert werden, um ein problemloses Einsetzen der Geräte in die Dosen zu ermöglichen, denn dies ist insofern nachteilig, als das Gummimaterial sich im Laufe der Zeit von seiner Struktur her verändert (altert), so daß die Gummiringe spröde werden und verlorengehen können, wodurch der Einbau derartiger Geräte durch unkontrolliert abgespreizte Spreizkrallen erschwert wird.

In der DE-A-27 57 267 ist ein bekanntes Installationsgerät der eingangs genannten Art beschrieben, das einen Teil dieser Nachteile ebenfalls aufweist. In einer in der DE-A-27 57 267 in Fig. 1 dargestellten, vollständig aufgespreizten Ausgangsposition, die als "Normalstellung" bezeichnet wird, wird dieses Installationsgerät unter elastischer Verformung in eine Unterputz-Dose eingeführt. Danach bleiben Spreizklammern des Gerätes bis auf eine eventuelle elastische Rückfederung in dieser Normalstellung. Durch das Betätigen einer Schraube gelangt die Vorrichtung in einen in der DE-A-27 57 267 in Fig. 4 dargestellten Zustand, in dem die Spreizklammern zur Entnahme der Vorrichtung aus der Unterputz-Dose eine zurückgeschwenkte Stellung einnehmen.

Der vorliegenden Erfindung liegt die Aufgabe zugrunde, ein gattungsgemäßes Installationsgerät zu schaffen, welches im Vergleich zu bekannten Geräten einen deutlich erleichterten Einbau bei zugleich sicherer Halterung gewährleistet.

Erfindungsgemäß wird das dadurch erreicht, daß sich in der Ausgangsposition jede Spreizkralle in einer ungespreizten Stellung befindet, aus der sie mittels der Stellschraube über einen Druckschenkel zur Erzielung einer erhöhten Haltekraft unter Verformung der elastischen Krallenteile nach außen spreizbar ist.

Das erfindungsgemäße Installationsgerät gewährleistet somit einerseits in einer vormontierten Ausgangsposition der Spreizkrallen eine sehr einfache, schnelle und komfortable Steckmontage des Gerätes, wobei das Gerät im montierten Zustand noch derart geringfügig beweglich in der Einbauöffnung fixiert ist, daß vorteilhafterweise ein Ausrichten des Gerätekörpers z. B. zur Anpassung an eventuelle Einbautoleranzen der Installationsdosen möglich ist; andererseits ist das erfindungsgemäße Installationsgerät durch ein Weiterspreizen der Spreizkrallen (mittels der Stellschraube über den Druckschenkel) im wesentlichen starr in der Einbauöffnung fixierbar, so daß eine deutlich erhöhte Haltekraft erreichbar ist, wenn dies je nach Einbausituation erforderlich sein sollte.

Zudem kann auch eine Seitenausrichtung (Justierung) durch unterschiedliches Spreizen der beiden Spreizkrallen auf einfache Weise durchgeführt werden.

Vorzugsweise weist die Spreizkralle und/oder der elastische Krallenteil mindestens einen vom Gerätekörper wegweisenden Krallenfortsatz auf, wodurch eine formschlüssige oder zumindest kraftformschlüssige Halterung durch Eingreifen in die Dosenwandung erreicht werden kann.

Die erfindungsgemäße Spreizkralle kann einteilig aus VA-Blech ausgebildet sein. Dabei kann in einzelnen Teilbereichen der Spreizkralle, wie z.B. dem Krallenteil, durch unterschiedliche Formgebung und/oder unterschiedliche Materialstärke eine unterschiedliche Elastizität bzw. Formsteifigkeit erreicht werden. Es liegt aber auch im Bereich der Erfindung, die Spreizkrallen aus Federsstahl herzustellen, wobei durch bestimmte Maßnahmen (z.B. Sickenbildung) eine bereichsweise erhöhte Formstabilität gewährleistet werden kann.

Vorteilhafterweise ist das elektrische Installationsgerät dabei derart ausgebildet, daß jede Spreizkralle einen Befestigungsschenkel zur Befestigung am Gerätekörper aufweist, der mit dem elastischen Krallenteil im Längsschnitt gesehen stumpfwinklig verbundenen ist, wobei das Krallenteil sich entgegen der Einbaurichtung vom Gerätekörper weg erstreckt. Da die Krallenteile entgegen der Einbaurichtung weisend ausgerichtet sind, ist ein Einschieben der Installationsgeräte problemlos möglich. Bei einer Zugkraft entgegen der Einschubrichtung krallen sich die Krallenteile noch tiefer in die umfängliche Wandung der Installationsdose ein (Widerhaken-Wirkung).

Weitere vorteilhafte Ausgestaltungsmerkmale der Erfindung sind in den Unteransprüchen und in der folgenden Figurenbeschreibung enthalten.

Anhand von zwei vorteilhaften Ausführungsbeispielen soll nun die Erfindung näher erläutert werden. Dabei zeigen:
- Fig. 1: eine vergrößerte Darstellung einer ersten Ausführungsform des erfindungsgemäßen Installationsgerätes im eingebauten Zustand in einem in Einbaurichtung verlaufenden Halbschnitt,
- Fig. 2: die erste Ausführungsform des erfindungsgemäßen Installationsgerätes in einer der Fig. 1 analogen Darstellung, aber im Lösezustand,
- Fig. 3: eine vergrößerte Darstellung einer Spreizkralle einer zweiten Ausführungsform des erfindungsgemäßen Installationsgerätes in einem in Einbaurichtung verlaufenden Schnitt,
- Fig. 4: eine vergrößerte Darstellung einer am Gerätekörper befestigten Spreizkralle der zweiten Ausführungsform des erfindungsgemäßen Installationsgerätes bei Vorliegen des Einbauzustandes in einem in Einbaurichtung verlaufenden Halbschnitt,
- Fig. 5: eine Fig. 4 entsprechende Darstellung der zweiten Ausführungsform des erfindungsgemäßen Installationsgerätes im eingebauten Zustand, jedoch bei maximal gespreizter Spreizkralle,
- Fig. 6: eine Darstellung der zweiten Ausführungsform des erfindungsgemäßen Installationsgerätes mit einer Spreizkralle entsprechend den Fig. 3 bis 5, jedoch im Lösezustand in einem in Einbaurichtung verlaufenden Halbschnitt,
- Fig. 7: in geringerem Vergrößerungsmaßstab als die Fig. 3 bis 6, eine Draufsicht auf einen Blechzuschnitt für die Spreizkralle der zweiten Ausführungsform des erfindungsgemäßen Installationsgerätes.

In den verschiedenen Figuren der Zeichnung sind gleiche und sich funktionell entsprechende Teile stets mit denselben Bezugszeichen versehen.

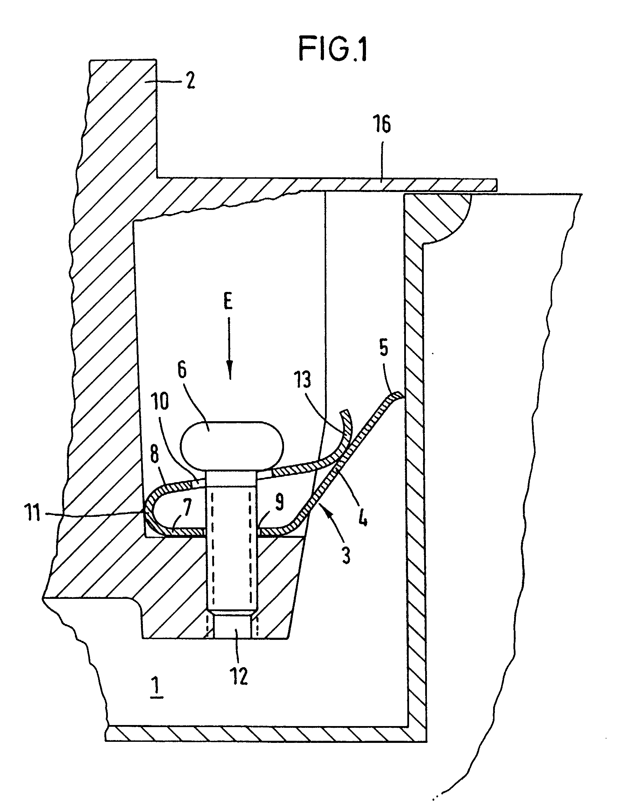

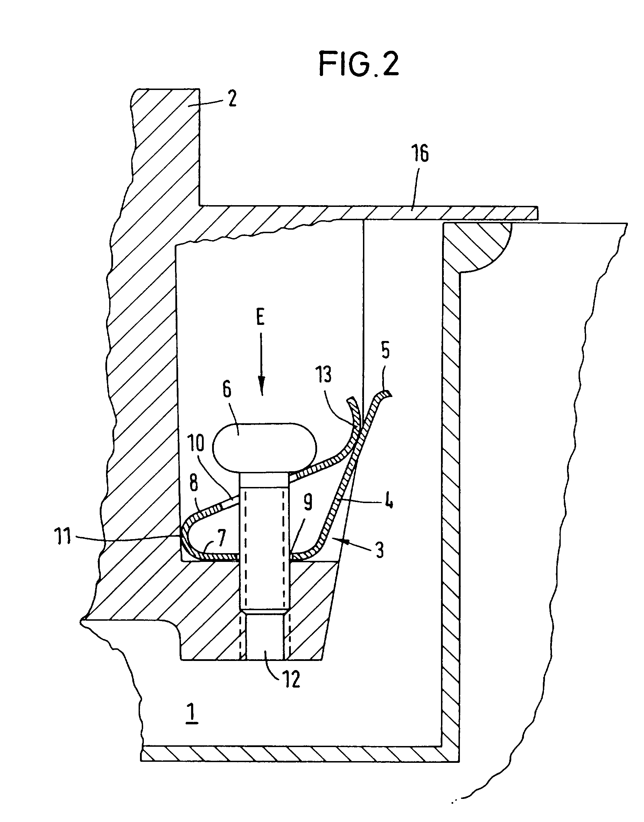

In den Fig. 1 und 2 ist eine erste Ausführungsform eines erfindungsgemäßen Installationsgerätes veranschaulicht. Das erfindungsgemäße Installationsgerät ist insbesondere für den Einbau in eine Einbauöffnung 1 einer Installationsdose oder dergleichen vorgesehen und besteht im wesentlichen aus einem nur angedeuteten Gerätekörper 2 mit mindestens zwei quer zur Einbaurichtung E gesehen gegenüberliegend angeordneten Spreizkrallen 3, wobei jede der Spreizkrallen 3 erfindungsgemäß ein elastisches Krallenteil 4 aufweist, das auch als Krallenschenkel bezeichnet werden könnte.

Jedes der elastischen Krallenteile 4 besitzt auf seiner dem Gerätekörper 2 abgekehrten Seite mindestens einen Krallenfortsatz 5 für den kraft- und/oder formschlüssigen Eingriff in die Wandung der Einbauöffnung 1.

Dabei sind die Spreizkrallen 3 über parallel zur Einbaurichtung E verlaufende, von außen zugängliche Stellschrauben 6 mit dem Gerätekörper 2 verbunden. Die Spreizkrallen 3 sind über einen vorzugsweise senkrecht zur Einbaurichtung E verlaufenden Befestigungsschenkel 7 am Gerätekörper 2 gelagert und können zur Einbauhalterung des Gerätekörpers 2 mittels der Stellschrauben 6 mit einem freien Ende von dem Gerätekörper 2 weg nach außen gespreizt werden. Das elastische Krallenteil 4 gewährleistet erfindungsgemäß, daß in einer ungespreizten Ausgangsposition der Spreizkrallen 3 der Gerätekörper 2 unter Verformung der elastischen Krallenteile 4 in die Einbauöffnung 1 einsteckbar und darin durch die elastischen Krallenteile 4 kraft- und/oder formschlüssig fixierbar ist. Ferner ist gewährleistet, daß in einer zweiten Position der Spreizkrallen 3, in der diese unter Verformung der elastischen Krallenteile 4 weiter nach außen gespreizt sind, eine erhöhte Haltekraft 3 erreichbar ist.

Der Befestigungsschenkel 7 einer jeden Spreizkralle 3 ist mit dem elastischen Krallenteil 4 stumpfwinklig verbunden. Das Krallenteil 4 erstreckt sich dabei entgegen der Einbaurichtung E vom Gerätekörper 2 weg.

Jede Spreizkralle 3 weist weiterhin einen Druckschenkel 8 auf, durch den die Spreizkrallen 3 zur Erzielung der erhöhten Haltekraft unter Verformung der elastischen Krallenteile 4 nach außen spreizbar sind.

Die Befestigungsschenkel 7 und die Druckschenkel 8 weisen jeweils ein Loch 9, 10 zum Durchgriff der Stellschraube 6 auf, welches bei den Druckschenkeln 8 als Langloch 10 ausgebildet ist und so eine seitliche Bewegung der Druckschenkel 8 zuläßt. Im Gerätekörper 2 ist ein Gewindeloch 12 zur Befestigung der Stellschraube 6 vorgesehen.

Der Druckschenkel 8 jeder Spreizkralle 3 schließt sich auf der dem elastischen Krallenteil 4 abgewandten Seite an den Befestigungsschenkel 7 an und ist mit dem Befestigungsschenkel 7 über einen U-förmigen, vom Gerätekörper 2 wegweisenden Verbindungsabschnitt 11 verbunden. Der Druckschenkel 8 erstreckt sich quer zur Einsteckrichtung E über den Befestigungsschenkel 7 hinweg. Der Druckschenkel 8 weist endseitig einen gebogenen Anlagebereich 13 auf, mit dem er an dem elastischen Krallenteil 4 anliegt. Durch die gebogene Ausbildung dieses Anlagebereiches 13 kann der Druckschenkel 8 leicht auf dem Krallenteil 4 unter Verformung desselben abgleiten, wenn auf den Druckschenkel 8 über die Stellschraube 6 ein Druck in Einbaurichtung E ausgeübt wird. Der Druckschenkel 8 ist federnd ausgebildet, wodurch keine zusätzlichen Federelemente notwendig sind.

Vorteilhafterweise sind bei dem erfindungsgemäßen elektrischen Installationsgerät die Spreizkrallen 3 mit den zugehörigen elastischen Krallenteilen 4, den Befestigungsschenkeln 7 und den Druckschenkeln 8 als einteilige Befestigungselemente ausgebildet. Wie bereits dargestellt wurde, kann zur Herstellung dabei vorzugsweise VA-Blech oder Federstahl eingesetzt werden.

Die Spreizkrallen 3 können in einzelnen Teilbereichen, wie den Krallenteilen 4, den Befestigungsschenkeln 7, den Druckschenkeln 8 und/oder den Verbindungsabschnitten 11, eine unterschiedliche Formgebung und/oder unterschiedliche Materialstärke aufweisen, wodurch vorteilhafterweise eine unterschiedliche Elastizität bzw. Formsteifigkeit der Teilbereiche erreicht wird.

Wie Fig. 1 zeigt, wird zur Montage des erfindungsgemäßen elektrischen Installationsgerätes jeweils die Stellschraube 6 durch das Loch 9 des Befestigungsschenkels 7 der Spreizkralle 3 und durch das Langloch 10 des Druckschenkels 8 gesteckt und dann in das Gewindeloch 12 des Gerätekörpers 2 geschraubt. Dabei werden die elastischen Krallenteile 4 vorgespannt, d.h. die Stellschraube 6 wird soweit angezogen, daß die elastischen Krallenteile 4 mit ihren Krallenfortsätzen 5 durch den Druckschenkel 8 in eine Spreizposition gebracht werden, wobei der Kopf der Stellschraube 6 gegen den Druckschenkel 8 in Richtung an den Gerätekörper 2 gedrückt wird. Weder die Stellschraube 6 noch das Gewindeloch 12 im Gerätekörper 2 bedarf dabei einer speziellen Gewindeausbildung. Durch diese Befestigung erübrigen sich vorteilhafterweise auch die oben erwähnten, vielfach verwendeten Gummiringe zur Befestigung der Spreizkrallen 3 am Gerätekörper 2.

Der Gerätekörper 2 mit den daran befestigten Spreizkrallen 3 ist auf diese Weise geringfügig breiter als die Einbauöffnung 1. Die so vormontierten Baueinheiten können durch eine einfache, schnelle und komfortable Steckmontage in der Einbauöffnung 1 fixiert werden. Beim Einstecken werden die Spreizkrallen 3 gegen die Federwirkung der Druckschenkel 8 elastisch zur Mitte des Gerätes hin deformiert. Dabei ist das Gerät im montierten Zustand noch geringfügig beweglich, so daß vorteilhafterweise ein Ausrichten des Gerätekörpers 2, z. B. Zur Anpassung an eventuelle Einbautoleranzen der Installationsdosen, möglich ist.

Danach kann durch ein weiteres Anziehen der Stellschrauben 6 die Haltekraft der Spreizkrallen 3 vergrößert werden, wenn dies entsprechend der Einbausituation erforderlich sein sollte. Beim Anziehen der Stellschrauben 6 verringert sich gegen die Federwirkung des Druckschenkels 8 der Abstand zwischen dem Druckschenkel 8 und dem Befestigungsschenkel 7. Der Druckschenkel 8 wird in Einsteckrichtung E weiter gegen den Befestigungsschenkel 7 bewegt. Dabei führt der Druckschenkel 8 gleichzeitig eine seitliche Bewegung aus, wobei sich der Anlagebereich 13 des Druckschenkels 8 mit dem elastischen Krallenteil 4 nach außen bewegt. Dadurch werden die Spreizkrallen 3 mit einer erhöhten Haltekraft im wesentlichen starr in der Einbauöffnung 1 fixiert. Zudem kann auch eine Seitenausrichtung (Justierung) durch unterschiedliches Spreizen der beiden Spreizkrallen 3 auf einfache Weise durchgeführt werden, indem die Stellschrauben 6 unterschiedlich stark angezogen werden.

Der im Endbereich des elastischen Krallenteils 4 angeordnetete vom Gerätekörper 2 wegweisenden Krallenfortsatz 5, bewirkt in der weitergespreizten Position der Spreizkralle 3 eine zusätzlich erhöhte Haltekraft und gegebenenfalls einen formschlüssigen Wandeingriff für die Halterung des Gerätekörpers 2 in der Einbauöffnung 1.

Der in Fig. 2 gezeigte Lösezustand der ersten Ausführungsform des erfindungsgemäßen Installationsgerätes zeigt, daß eine Demontage sehr einfach durch ein Lösen der Stellschrauben 6 möglich ist. Beim Lösen der Stellschrauben 6 vergrößert sich unter der Federwirkung des Druckschenkels 8 der Abstand zwischen dem Druckschenkel 8 und dem Befestigungsschenkel 7. Der Druckschenkel 8 bewegt sich entgegen der Einsteckrichtung E vom Befestigungsschenkel 7 weg. Dabei führt der Druckschenkel 8 gleichzeitig eine seitliche Bewegung aus, wobei sich der Anlagebereich 13 des Druckschenkels 8 mit dem elastischen Krallenteil 4 nach innen verlagert. Dadurch läßt die Haltekraft der Spreizkrallen 3 nach. Schließlich bewegen sich die elastischen Krallenteile 4 soweit von der Wandung der Einbauöffnung 1 nach innen, daß das Installationsgerät einfach entgegen der Einsteckrichtung E herausgezogen werden kann.

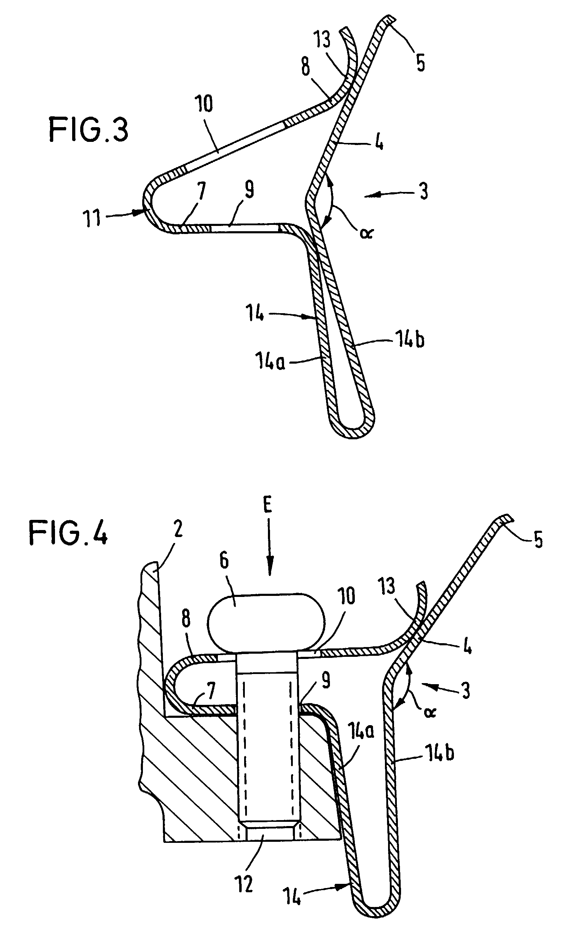

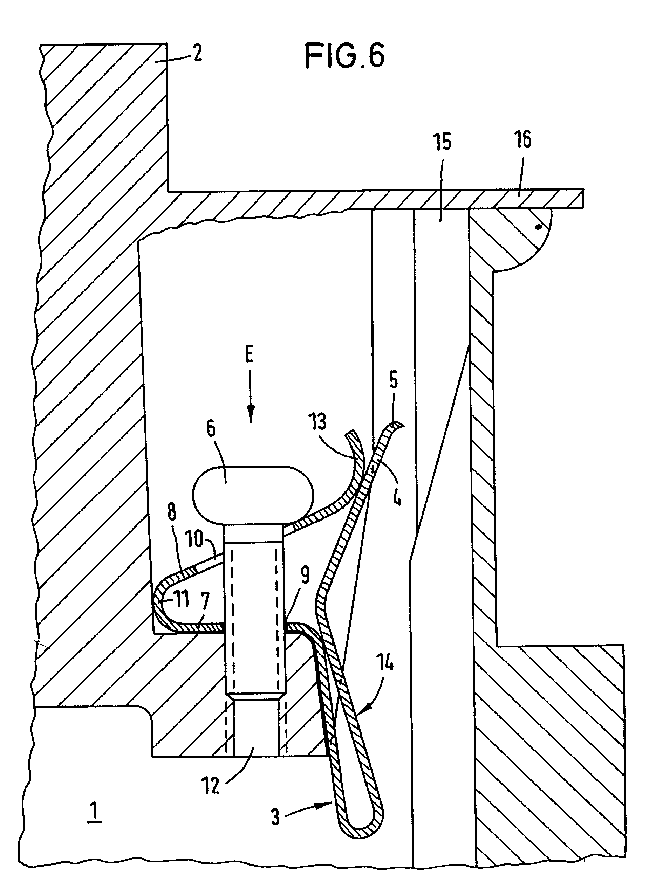

Die Fig. 3 bis 7 zeigen eine zweite vorteilhafte Ausführung des erfindungsgemäßen Installationsgerätes. Fig. 3 zeigt die vergrößerte Darstellung einer einzelnen Spreizkralle 3 in einem in Einbaurichtung verlaufenden Schnitt. Die Fig. 4 bis 6 zeigen die Spreizkralle 3 mit dem Gerätekörper 2 verbunden bzw. zusätzlich mit der Darstellung der Einbauöffnung 1 (Fig. 6). Es sind drei unterschiedliche Positionen von Stellschraube 6 und Spreizkralle 3 jeweils im Halbschnitt dargestellt. Dabei ist die in Fig. 3 in ihrem Ausgangszustand dargestellte Spreizkralle 3 des erfindungsgemäßen Installationsgerätes in dem in Fig. 4 dargestellten Zustand unter Vorspannung (in der gleichen Weise wie bei der Erläuterung des ersten Ausführungsbeispiels beschrieben wurde) mit dem Gerätekörper 2 verbunden. Diese Baueinheit kann in eine Installationsdose eingesetzt werden, indem sie einfach in die Einbauöffnung 1 eingedrückt wird (Steckmontage).

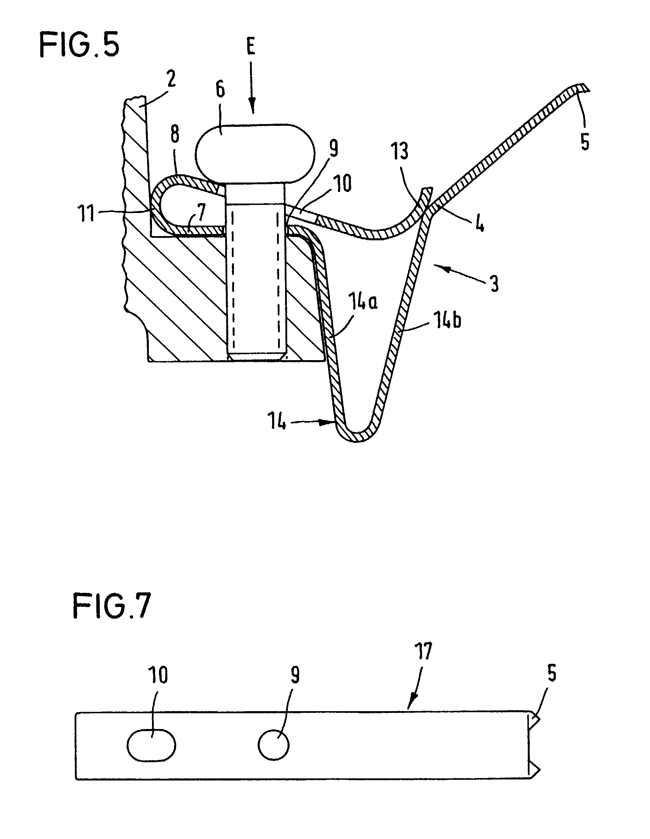

Um die Haltekraft des erfindungsgemäße Installationsgerät in der Einbauposition vergrößern zu können, können die Stellschrauben 6 weiter in den Gerätekörper 2 eingeschraubt werden. Hierdurch werden, wie Fig. 6 zeigt und wie bereits vorstehend erläutert wurde, die elastischen Krallenteile 4 weiter abgespreizt, so daß sie dann ihrerseits mit ihren Krallenfortsätzen 5 in die Wandung der Installationsdose eingreifen. Diese Funktion der Spreizkrallen 3 entspricht im wesentlichen den herkömmlichen, bekannten Installationsgeräten, bei denen die Spreizkrallen ausschließlich durch Verschraubung nach außen gedrückt werden können, um so den jeweiligen Gerätekörper fest in der Installationsdose arretieren zu können. Fig. 5 zeigt die maximale Aufspreizung einer Spreizkralle 3, wobei sich der Anlageabschnitt 13 des Druckschenkels 8 am dem Befestigungsschenkel 7 zugewandten Ende des elastischen Krallenteils 4 befindet. Gegenüber dem Krallenteil 4 verhält sich der Druckschenkel 8 aufgrund seiner quer zum Krallenteil 4 angeordneten Längserstreckung im wesentlichen starr.

Um aus dieser Position das Installationsgerät lösen zu können, werden die Stellschrauben 6 jeweils in der oben beschriebenen Weise wieder so weit gelöst, bis das Gerät aus der Einbauöffnung 1 entnommen werden kann (Fig. 6).

Die zweite Ausführung der Erfindung zeichnet sich gegenüber der ersten Ausführung dadurch aus, daß zwischen dem Befestigungsschenkel 7 und dem elastischen Krallenteil 4 einer Spreizkralle 3 zusätzlich ein sich im wesentlichen in Einbaurichtung E erstreckender, U-förmig ausgebildeter Federabschnitt 14 angeordnet ist. Dieser Federabschnitt 14 kommt mit einem U-Schenkel 14a bei der Befestigung der Spreizkralle 3 an einer Seitenwandung des Gerätekörper 2 zur Anlage, wodurch seine Einbaulage im vorgespannten Zustand der Spreizkralle 3 in Verbindung mit dem Befestigungsschenkel 7 festgelegt wird. Der andere U-Schenkel 14b, an den sich das elastische Krallenteil 4 über einen stumpfen Außenwinkel a anschließt, liegt im ungespannten Zustand der Spreizkralle 3 im Übergangsbereich zum Krallenteil 4 am ersten U-Schenkel 14a an. In der Einbaulage kann, wie die Figurenfolge 3 bis 5 verdeutlicht, der Federabschnitt 14 elastisch aufgespreizt werden, wobei sich der Abstand der beiden U-Schenkel 14a, 14b vergößert. Diese Aufspreizung vergrößert den möglichen Federweg der elastischen Krallenteile 4 und führt zu einer "weicheren" Federkennlinie. Das bedeutet, die aufzubringende Kraft, um das elastische Krallenteil 4 um einen bestimmten Betrag nach außen zu spreizen, ist vorteilhafterweise geringer als beim ersten Ausführungsbeispiel der Erfindung.

Die in Fig. 3 bis 7 veranschaulichte Ausführungsform eignet sich insbesondere zur Montage in solchen Installationsdosen, die, wie Fig. 6 zeigt, innenseitig zwei diametral gegenüberliegende, längs in Einsetzrichtung des jeweiligen Gerätes verlaufende Schraubloch-Vorsprünge 15, sogenannte Dome, aufweisen, die zum Einschrauben von Geräte-Befestigungsschrauben, beispielsweise für einen Tragring 16 des Gerätekörpers 2, vorgesehen sind.

Die Spreizkrallen 3 können, wie Fig. 7 veranschaulicht, die eine Draufsicht auf einen Blechzuschnitt 17 für die Spreizkralle 3 der zweiten Ausführungsform des erfindungsgemäßen Installationsgerätes zeigt, in einfacher Weise und kostengünstig als Biegestanzteile aus Blech, vorzugsweise mit einer Dicke von 0,5 mm, hergestellt werden. In Fig. 7 sind insbesondere die Ausbildung der Löcher 9, 10 für den Befestigungsschenkel 7 und den Druckschenkel 8 sowie die spitzen Krallenfortsätze 5 der elastischen Krallenteile 4 zu sehen.

Die Erfindung ist nicht auf die dargestellten und beschriebenen Ausführungsbeispiele beschränkt, sondern umfaßt auch alle im Sinne der Erfindung gleichwirkenden Ausführungen, wie beispielsweise mit einer Spreizkralle 3, die ein entgegen der Einbaurichtung E vom Gerätekörper 2 konvex bogenförmig weggekrümmtes elastisches Krallenteil 4 aufweist.

## Patentansprüche

1. Elektrisches Installationsgerät für den Einbau in eine Einbauöffnung (1) einer Installationsdose oder dergleichen, bestehend aus einem Gerätekörper (2) mit mindestens zwei quer zur Einbaurichtung (E) gesehen gegenüberliegend angeordneten Spreizkrallen (3), wobei jede der Spreizkrallen (3) ein elastisches Krallenteil (4) aufweist und derart am Gerätekörper (2) gelagert ist, daß sie zur Einbauhalterung des Gerätekörpers (2) mittels einer Stellschraube (6) mit ihrem freien Ende von dem Gerätekörper (2) weg nach außen spreizbar ist, und wobei in einer Ausgangsposition der Spreizkrallen (3) der Gerätekörper (2) unter Verformung der elastischen Krallenteile (4) in die Einbauöffnung (1) einsteckbar und darin durch die elastischen Krallenteile (4) kraft- und/oder formschlüssig fixierbar ist,
**dadurch gekennzeichnet**, daß sich in der Ausgangsposition jede Spreizkralle (3) in einer ungespreizten Stellung befindet, aus der sie mittels der Stellschraube (6) über einen Druckschenkel (8) zur Erzielung einer erhöhten Haltekraft unter Verformung der elastischen Krallenteile (4) nach außen spreizbar ist.

2. Elektrisches Installationsgerät nach Anspruch 1,
**dadurch gekennzeichnet**, daß jede Spreizkralle (3) einen vorzugsweise senkrecht zur Einbaurichtung (E) verlaufenden Befestigungsschenkel (7) zur Befestigung am Gerätekörper (2) aufweist, der mit dem elastischen Krallenteil (4) im Längsschnitt gesehen stumpfwinklig verbunden ist, wobei das Krallenteil (4) sich entgegen der Einbaurichtung (E) vom Gerätekörper (2) weg erstreckt.

3. Elektrisches Installationsgerät nach Anspruch 1 oder 2,
**dadurch gekennzeichnet**, daß jedes der elastischen Krallenteile (4) auf seiner dem Gerätekörper (2) abgekehrten Seite mindestens einen Krallenfortsatz (5) für den kraft- und/oder formschlüssigen Eingriff in die Wandung der Einbauöffnung (1) aufweist.

4. Elektrisches Installationsgerät nach einem oder mehreren der Ansprüche 1 bis 3,
**dadurch gekennzeichnet**, daß sich der Druckschenkel (8) jeder Spreizkralle (3) auf der dem elastischen Krallenteil (4) abgewandten Seite an den Befestigungsschenkel (7) anschließt, mit dem Befestigungsschenkel (7) über einen im wesentlichen U-förmigen, vom Gerätekörper (2) wegweisenden Verbindungsabschnitt (11) federnd verbunden ist und sich in Einbaurichtung (E) gesehen in spitzem Winkel zum Befestigungsschenkel (7) verlaufend über den Befestigungsschenkel (7) hinweg erstreckt.

5. Elektrisches Installationsgerät nach einem der Ansprüche 1 bis 4,
**dadurch gekennzeichnet**, daß der Befestigungsschenkel (7) ein Loch (9) und der Druckschenkel (8) ein Langloch (10) zum Durchgriff der Stellschraube (6) aufweisen.

6. Elektrisches Installationsgerät nach einem der Ansprüche 1 bis 5,
**dadurch gekennzeichnet**, daß der Druckschenkel (8) endseitig einen gewölbten Anlagebereich (13) für das elastische Krallenteil (4) aufweist.

7. Elektrisches Installationsgerät nach der Ansprüche 2 bis 6,
**dadurch gekennzeichnet**, daß zwischen dem Befestigungsschenkel (7) und dem elastischen Krallenteil (4) einer Spreizkralle (3) ein sich im wesentlichen in Einbaurichtung (E) erstreckender, U-förmig ausgebildeter Federabschnitt (14) angeordnet ist.

8. Elektrisches Installationsgerät nach einem der Ansprüche 1 bis 7,
**dadurch gekennzeichnet**, daß die Spreizkrallen (3) mit den zugehörigen elastischen Krallenteilen (4), den Befestigungsschenkeln (7), den Druckschenkeln (8) und gegebenenfalls dem Federabschnitt (14) als einteilige Befestigungselemente ausgebildet sind.

9. Elektrisches Installationsgerät nach einem der Ansprüche 1 bis 8,
**dadurch gekennzeichnet**, daß die Spreizkrallen (3) aus VA-Blech oder Federstahl bestehen.

10. Elektrisches Installationsgerät nach einem der Ansprüche 1 bis 9,
**dadurch gekennzeichnet**, daß die Spreizkrallen (3) in einzelnen Teilbereichen, wie den Krallenteilen (4), den Befestigungsschenkeln (7), den Druckschenkeln (8), den Verbindungsabschnitten (11) und/oder den Federabschnitten (14), unterschiedliche Formgebung und/oder unterschiedliche Materialstärke aufweisen, wobei eine unterschiedliche Elastizität bzw. Formsteifigkeit der Teilbereiche erreicht wird.

## Claims

1. Electrical accessory for installing in an installing opening (1) of a wiring socket or the like, comprising an accessory body (2) with at least two expanding claws (3) arranged oppositely when seen transverse to the installing direction (E), each of the expanding claws (3) having an elastic claw part (4) and being mounted on the accessory body (2) in such a way that, for the purpose of flush mounting the accessory body (2), it can be expanded away outwards from the accessory body (2) with its free end by means of an adjusting screw (6), and in an initial position of the expanding claws (3) the accessory body (2) being able to be plugged, with deformation of the elastic claw parts (4), into the installing opening (1) and be fixed therein by the elastic claw parts (4) in a force-closed and/or self-closed fashion, characterized in that in the initial position each expanding claw (3) is located in an unexpanded position from which it can be expanded outwards, with deformation of the elastic claw parts (4), by means of the adjusting screw (6) via a pressing limb (8) in order to achieve an increased retaining force.

2. Electrical accessory according to Claim 1, characterized in that each expanding claw (3) has a fastening limb (7), preferably running perpendicular to the installing direction (E), for fastening on the accessory body (2), which is connected to the elastic claw part (4) at an obtuse angle when seen in longitudinal section, the claw part (4) extending opposite to the installing direction (E) away from the accessory body (2).

3. Electrical accessory according to Claim 1 or 2, characterized in that at its end averted from the accessory body (2), each of the elastic claw parts (4) has at least one claw extension (5) for engaging in the wall of the installing opening (1) in a force-closed and/or self-closed fashion.

4. Electrical accessory according to one or more of Claims 1 to 3, characterized in that at the end averted from the elastic claw part (4) the pressing limb (8) of each expanding claw (3) ajoins the fastening limb (7), is resiliently connected to the fastening limb (7) via an essentially U-shaped connecting section (11) pointing away from the accessory body (2), and extends away over the fastening limb (7) in a fashion running at an acute angle to the fastening limb (7) when seen in the installing direction (E).

5. Electrical accessory according to one of Claims 1 to 4, characterized in that the fastening limb (7) has a hole (9) and the pressing limb (8) has an elongated hole (10) for the passage of the adjusting screw (6).

6. Electrical accessory according to one of Claims 1 to 5, characterized in that at its end the pressing limb (8) has an arched bearing region (13) for the elastic claw part (4).

7. Electrical accessory according to Claims 2 to 6, characterized in that a spring section (14) of U-shaped construction extending essentially in the installing direction (E) is arranged between the fastening limb (7) and the elastic claw part (4) of an expanding claw (3).

8. Electrical accessory according to one of Claims 1 to 7, characterized in that the expanding claws (3) are constructed as unipartite fastening elements with the associated elastic claw parts (4), the fastening limbs (7), the pressing limbs (8) and, if appropriate, the spring section (14).

9. Electrical accessory according to one of Claims 1 to 8, characterized in that the expanding claws (3) consist of VA plate or spring steel.

10. Electrical accessory according to one of Claims 1 to 9, characterized in that in individual subregions, such as the claw parts (4), the fastening limbs (7), the pressing limbs (8), the connecting sections (11) and/or the spring sections (14), the expanding claws (3) are of different shape and/or different material strength, a different elasticity or dimensional stability of the subregions being achieved.

## Revendications

1. Dispositif d'installation électrique destiné à être monté dans une ouverture de montage (1) d'un boîtier d'installation ou analogue, comprenant un corps (2) qui comporte au moins deux griffes d'expansion (3) disposées en regard l'une de l'autre vues dans une direction transversale à la direction de montage (E), chacune de ces griffes (3) possédant une portion de griffe souple (4) et étant montée sur le corps (2) du dispositif de manière à ce que son extrémité libre puisse être écartée du corps (2) vers l'extérieur au moyen d'une vis d'ajustage (6), en vue de maintenir le corps (2) monté, et le corps (2) du dispositif pouvant être inséré dans l'ouverture de montage (1) avec les griffes d'expansion (3) dans une position initiale, en déformant les portions de griffe souples (4), et y être immobilisé par la force et/ou la forme, grâce aux portions de griffe souples (4),
caractérisé en ce que, dans la position initiale, chaque griffe d'expansion (3) se trouve dans une position non écartée à partir de laquelle elle peut être écartée vers l'extérieur au moyen de la vis d'ajustage (6), par l'intermédiaire d'un bras de pression (8) pour obtenir une plus grande force de maintien, tout en déformant les portions souples (4).

2. Dispositif d'installation électrique selon la revendication 1,
caractérisé en ce que chaque griffe d'expansion (3) présente un bras de fixation (7) qui s'étend de préférence perpendiculairement à la direction de montage (E), ce bras pouvant être fixé sur le corps (2) du dispositif et étant relié à angle obtus en vue suivant la section longitudinale, à la portion de griffe souple (4), la portion de griffe (4) s'écartant du corps (2) dans la direction opposée à celle de montage (E).

3. Dispositif d'installation électrique selon la revendication 1 ou 2,
caractérisé en ce que chacune des portions de griffes souples (4) comporte sur sa face opposée au corps (2) du dispositif, au moins un prolongement de griffe (5) s'insérant par la force et/ou la forme dans la paroi de l'ouverture de montage (1).

4. Dispositif d'installation électrique selon l'une ou plusieurs des revendications 1 à 3,
caractérisé en ce que le bras de pression (8) de chaque griffe d'expansion (3) prolonge le bras de fixation (7) sur le côté opposé à la portion de griffe souple (4), est relié élastiquement au bras de fixation (7) par une section de liaison (11) sensiblement en U orientée dans la direction opposée au corps (2) du dispositif, et s'étend, vu dans la direction de montage (E), à angle aigu par rapport au bras de fixation (7), et au-delà de celui-ci.

5. Dispositif d'installation électrique selon une des revendications 1 à 4,
caractérisé en ce que le bras de fixation (7) présente un trou (9), et que le bras de pression (8) présente un trou allongé (10) pour le passage de la vis d'ajustage (6).

6. Dispositif d'installation électrique selon l'une des revendications 1 à 5,
caractérisé en ce que le bras de pression (8) présente à son extrémité une région d'application incurvée (13) pour la portion de griffe souple (4).

7. Dispositif d'installation électrique selon les revendications 2 à 6,
caractérisé en ce que, entre le bras de fixation (7) et la portion souple (4) d'une griffe d'expansion (3) est agencée une portion élastique (14) en U s'étendant sensiblement dans la direction de montage (E).

8. Dispositif d'installation électrique selon l'une des revendications 1 à 7,
caractérisé en ce que les griffes d'expansion (3) avec leurs portions souples (4), les bras de fixation (7), les bras de pression (8), et éventuellement la section élastique (14), ont la forme d'éléments de fixation réalisés en une seule pièce.

9. Dispositif d'installation électrique selon l'une des revendications 1 à 8,
caractérisé en ce que les griffes d'expansion (3) sont réalisées en une tôle VA ou un acier à ressorts.

10. Dispositif d'installation électrique selon l'une des revendications 1 à 9,
caractérisé en ce que certaines parties des griffes d'expansion (3), telles que les portions (4), les bras de fixation (7), les bras de pression (8), les portions de liaison (11) et/ou les portions élastiques (14), présentent des formes et/ou des épaisseurs de matière variables, ce qui permet d'obtenir une élasticité ou rigidité de forme variable desdites parties.
